# EUROPEAN PATENT SPECIFICATION

(11) **EP 2 790 522 B1**
(45) Date of publication and mention of the grant of the patent: **03.06.2015**
(21) Application number: 12795789.2
(22) Date of filing: 30.11.2012
(51) Int. Cl.: A23D 7/005, A23L 1/22, A23L 1/24, A23D 7/00, A23L 3/3463

(54) **EMULSIFIED FOOD PRODUCT CONTAINING DAIRY PROTEIN**
EMULGIERTES LEBENSMITTELPRODUKT MIT MILCHPROTEIN
PRODUIT ALIMENTAIRE ÉMULSIFIÉ CONTENANT DES PROTÉINES DU LAIT

(30) Priority: 14.12.2011 EP 11193518
(43) Date of publication of application: 22.10.2014
(73) Proprietor: Nestec S.A., 1800 Vevey (CH)
(72) Inventor: JOURDAIN, Laureline, 1009 Pully (CH); FEZER, Ramona Jasmin, 78224 Singen (DE); GIUFFRIDA, Francesca, CH-1083 Mezieres (CH); MERINAT, Sylvie Joëlle, CH-1509 Vucherens (CH); MICHEL, Martin, CH-1010 Lausanne (CH)
(74) Representative: Mollet, Beat Max
(86) International application number: PCT/EP2012/074018
(87) International publication number: WO 2013/087419

(56) References cited:
- WO-A1-02/089602
- PL-B1- 190 081
- US-A1- 2006 246 146
- US-B1- 6 231 913
- JACOBSEN ET AL: "Antioxidant strategies for preventing oxidative flavour deterioration of foods enriched with n-3 polyunsaturated lipids: a comparative evaluation", TRENDS IN FOOD SCIENCE AND TECHNOLOGY, ELSEVIER SCIENCE PUBLISHERS, GB, vol. 19, no. 2, 10 January 2008 (2008-01-10), pages 76-93, XP022415460, ISSN: 0924-2244, DOI: 10.1016/J.TIFS.2007.08.001
- THOMPSON L U ET AL: "Succinylated Cheese Whey Protein Concentrate in Coffee Whitener and Salad Dressing", JOURNAL OF DAIRY SCIENCE,, vol. 65, no. 7, 1 July 1982 (1982-07-01), pages 1135-1140, XP001349216,
- DAUGAARD L: "EMULSIFIERS FOR MAYONNAISE PRODUCTION", FOOD MARKETING AND TECHNOLOGY, NUERNBERG, DE, vol. 7, no. 4, 1 August 1993 (1993-08-01), pages 17-19, XP001095910, ISSN: 0932-2744

## Description

### TECHNICAL FIELD

This invention relates to an emulsified food product and a process for preparing an emulsified food product. In particular, the invention relates to an EDTA-free mayonnaise, and the use of dairy proteins to stabilise mayonnaise against the degradative effects of iron ions present in the mayonnaise.

### BACKGROUND

A perception of naturalness is increasingly becoming an important attribute for food products. More and more, consumers demand that foods do not contain any additives, especially additives that are perceived to be non-natural or artificial. Cold sauces such as mayonnaise are no exception to this consumer demand. The additive EDTA (ethylenediaminetetraacetic acid) is particularly relevant for mayonnaise products. The presence of EDTA in a food product requires an E number (E385) on the product packaging, and this is recognised by consumers as an additive that is non-natural and so can influence purchasing decisions.

The reason EDTA is added to many mayonnaise products is to counter the fishy and metallic flavour off-notes that develop after some time. Mayonnaise products contain unsaturated fatty acids, especially omega-3 fatty acids, many of which are polyunsaturated acids. These compounds decompose on storage through oxidation catalysed by trace amounts of iron ions to give the undesirable off-notes. Iron is naturally present in egg yolk and so the presence of iron is unavoidable in any food product containing egg yolk. EDTA is a well-known chelating agent and is added to bind the iron ions making them unavailable for catalysing the oxidation of unsaturated fatty acids. The fatty acids are therefore stabilised and the off-notes are minimised or prevented altogether.

EDTA is the only solution known for inhibiting the formation of fishy and rancid off-notes in mayonnaises having a content high in omega-3 fatty acids. Its use can extend the shelf-life of such mayonnaise products from, for example, 1 month to 9 months.

US patent application 12/642,223 describes one way to avoid the addition of EDTA to food products which would otherwise develop an unpleasant taste or aroma through lipid oxidation. The method involves preparing an iron-reduced egg yolk. Iron and phosvitin are extracted from the egg yolk. The iron is removed from the phosvitin and the phosvitin is then added back to the egg yolk. A mayonnaise containing no iron can then be prepared from this egg yolk. This method is, however, time consuming and complicated, which is unlikely to be economically viable for mayonnaises and similar food products.

Jacobsen et al., Trends in Food Science and Technology, 2008, 19, 76-93, also deals with the oxidative stability of emulsified food products containing unsaturated fatty acids such as mayonnaise and discloses lactoferrin for binding iron ions which would otherwise catalyse the oxidation reaction.

There is an ongoing search for new and improved ways of producing emulsified food products having varying levels and types of unsaturated fatty acids which are resistant to oxidation and spoilage and yet do not contain EDTA or other non-natural chelating agents for binding with iron.

Some food products are known that rely on additives other than EDTA to stabilise unsaturated fatty acids. These may be traditional phenolic synthetic antioxidants, e.g. BHA (butylated hydroxyanisole), BHT (butylated hydroxytoluene), TBHQ (tert-butylhydroquinone), and propyl gallate, or natural antioxidants, e.g. green tea extract (which has a high content of catechins and polyphenolic), rosemary extracts (which are rich in phenolic diterpenes) and tocopherol extracts (which are derived from soya oil). Citric acid and certain sulphites are also used in some mayonnaise products.

Different classes of molecules are potential natural metal-chelators including flavonoids, polyphenols, proteins, peptides and polysaccharides.

Proteins have been widely reported to be efficient in delaying metal-catalysed lipid oxidation in emulsions. The mechanism of protection depends on the location of the protein in the emulsion system. When adsorbed at the oil/water interface, proteins can repel iron electrostatically and thus reduce interactions between iron and lipid hydroperoxides (Kellerby et al., Journal of Agricultural and Food Chemistry, 2006, 54, 7879-7884). When present in the aqueous phase, proteins can bind to the iron, with caseinate for example, having better chelating activity than whey proteins (Faraji et al., Journal of Agricultural and Food Chemistry, 2004, 52, 4558-4564).

Some milk proteins and peptides are known to have good antioxidant properties (Elias et al., Critical Reviews in Food Science and Nutrition, 2008, 48, 430-441). This is mainly attributed to the presence of phosphoserine amino acid residues, which can bind to metal ions. For example, casein phosphopeptides can inhibit the oxidation of corn oil emulsions at acidic and neutral pH (Diaz et al., Journal ofAgricultural and Food Chemistry, 2003, 51, 2365-2370). Casein hydrolysates are also excellent inhibitors of lipid oxidation in emulsions because they have both metal-chelating and radical-scavenging properties (Diaz et al., Journal ofAgricultural and Food Chemistry, 2003, 51, 2365-2370). Because they have fewer clusters of phosphoserine residues, whey proteins have a lower iron-binding activity than caseins (Sugiarto et al., Dairy Sci. Technol., 2009, in press, DOI: 10.1051/dst/2009053). Casein glycomacropeptide (cGMP) is a dairy protein known for its many potential health benefits. For example, cGMP may modulate immune system responses, have an antihypertensive effect and regulate intestinal function. It has also been described to have a dental protective effect (oral hygiene, tooth remineralization, plaque reduction). Because of its appetite reduction or satiety enhancement effect, cGMP is mainly used in food products and food supplements for weight management. cGMP, however, contains only one phosphorylation site and therefore would not be expected to exhibit strong iron-binding activity.

Contrary to this expectation, the applicant has found that dairy proteins, and cGMP in particular, do bind iron under the right conditions and therefore are effective for stabilising emulsified food products that contain unsaturated fatty acids such as mayonnaise.

An object of the present invention is therefore to provide an emulsified food product that at least goes part way to overcoming one or more of the above disadvantages of existing products, or at least to provide a useful alternative.

### SUMMARY OF THE INVENTION

In a first aspect of the invention there is provided an emulsified food product comprising:
a) oil and/or fat, which contains some omega-3 fatty acids;
b) 0.05 to 5 % by weight of dairy protein; and
c) at least 10 ppm iron ions;
wherein the food product contains no EDTA (ethylenediaminetetraacetic acid); and
wherein the dairy protein is casein glycomacropeptide (cGMP).

The food product preferably comprises at least 1 %, more preferably at least 5 %, and even more preferably at least 10 %, by weight oil and/or fat. The oil and/or fat preferably contains at least 0.1 %, more preferably at least 1 %, and even more preferably at least 5 %, by weight of omega-3 fatty acids. In some preferred embodiments of the invention, the oil and/fat contains 8 to 12 % by weight omega-3 fatty acids. In other preferred embodiments, the oil and/fat contains 20 to 40 % by weight omega-3 fatty acids.

In some embodiments, the food product comprises 15 to 35 % by weight oil and/or fat. In other embodiments, the food product comprises 70 to 85 % by weight oil and/or fat.

Preferably, the food product comprises 0.1 to 3 % by weight of dairy protein. It is also preferred that the food product comprises at least 20 ppm iron ions, preferably at least 50 ppm iron ions.

The dairy protein is a casein glycomacropeptide.

The food product may comprise egg yolk, which may be fresh egg yolk or powdered egg yolk. The egg yolk is preferably present in the amount of at least 1 % by weight.

In preferred embodiments of the invention, the food product is a mayonnaise, salad dressing, beverage, creamer, infant formula, baby food, dairy product, cereal products, functional drink, or pet food.

In a second aspect of the invention, there is provided an emulsified food product that contains no EDTA (ethylenediaminetetraacetic acid) comprising mixing together:
a) oil and/or fat, which contains some omega-3 fatty acids;
b) 0.05 to 5 % by weight of dairy protein
c) a source of iron which contains at least 10 ppm iron ions; and
d) water;
and wherein the dairy protein is casein glycomacropeptide (cGMP).

The process may further comprise mixing an acidifier with components a) to d). In some embodiments, the acidifier is mixed with components b) to c), and then a) is added and emulsified. In other embodiments, components b) and c) are mixed together, then the acidifier is added and mixed, and then a) is added and emulsified. In other embodiments, components b) and c) are mixed together, then a) is added and emulsified, and then the acidifier is added and mixed.

### BRIEF DESCRIPTION OF THE FIGURES

Figure 1 shows the iron binding activity of cGMP and casein hydrolysate in water compared with EDTA.
Figure 2 shows the effect of process on iron binding activity of cGMP at acidic pH.
Figure 3 shows the effect of process on iron binding activity for caseinate at acidic pH.

### DETAILED DESCRIPTION

The term "emulsified" as it relates to the food product of this invention means oil droplets dispersed in a water matrix, i.e. an oil-in-water emulsion.

The term "omega-3 fatty acid" means an unsaturated fatty acid having a double bond starting after the third carbon atom from the end (known as the omega end) of the carbon chain.

The term "iron ions" refers to Fe²⁺ or Fe³⁺ or any combination thereof.

The term "protein" means a combination of chemically bound amino acid residues, and includes peptides, hydrolysed proteins, and any protein or peptide fragment.

The term "acidifier" means any ingredient that is used to decrease pH, and also may be referred to as acid, acidity regulator, acidic buffering agent, pH adjusting agent etc. The acidifier used in this invention may be, but is not limited to, vinegar, mustard, citric acid, lemon juice, acetic acid, hydrochloric acid, phosphoric acid, malic acid, lactic acid, ascorbic acid, tartaric acid, fumaric acid, alginic acid, or succinic acid.

The term "dairy protein" refers to any protein, peptide, protein or peptide fraction, or any combination thereof, derived from milk.

The term "casein glycomacropeptide" or "cGMP" or "GMP", also known as "casein glycopeptide" or "CGP" refers to the C-terminal kappa-casein peptide containing the amino acid residues 106-169, and is part of the whey protein obtained from the treatment of milk with chymosin. The degree and nature of glycosylation can vary significantly depending primarily on processing conditions, and may comprise, for example, galactose, N-acetylneuraminic acid (sialic acid) and N-acetylgalactosamine. The theoretical molecular weight of cGMP is 6707 Daltons but, depending on the glycosylation, may be much higher. There are two major variants of cGMP, variant A and variant B.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

The invention provides an emulsified food product comprising oil and/or fat (at least some of which is omega-3 fatty acids), dairy protein in the amount of 0.05 to 5 % by weight, and iron ions in the amount of at least 10 ppm, wherein there is no EDTA in the food product. As described above, the presence of EDTA in many food products is undesirable, but excluding EDTA then requires an alternative way to avoid the undesirable fishy off-notes that result from the interaction between iron ions and unsaturated fatty acids, particularly omega-3 fatty acids.

Incorporating dairy protein into emulsified food products that contain iron has now been found to preserve omega-3 fatty acids such that the presence of EDTA is not required to negate the action of iron by chelation. Thus, emulsified food products are obtained that contain no EDTA and have a higher level of omega-3 fatty acids which are well-known to be beneficial to human health.

Many food products inherently contain some iron ions. For example, any food product made from egg, especially egg yolk, will contain iron. Iron is a known catalyst for a range of chemical processes, one of which is the oxidation of unsaturated fatty acids. When omega-3 fatty acids in particular are oxidised, fishy and rancid flavours and aromas are commonly recognised by consumers. Thus, there is a need to remove the iron to render the iron ions inactive in some way. Removal of the iron is technically difficult and adds expense to food products. It has therefore been necessary to inactivate the iron present. The common method for doing this is to add a food grade chelating agent, such as EDTA, that will bind to the iron ions thereby inactivating the omega-3 fatty acid oxidation process.

The inventors have now found that dairy protein can be included as an ingredient in emulsified food products to bind the iron ions present such that the addition of EDTA is not needed. cGMP is the preferred dairy protein of the invention.

Binding of iron to dairy proteins at neutral pH can be achieved with a one-step process by directly mixing the iron ions with the dairy protein. However, at low pH and/or high ionic strength, the iron-binding activity of dairy proteins is significantly reduced and complexes do not form when mixing the iron ions and the protein directly. It is known that iron-binding activity is strongly dependent on pH and ionic strength. The maximum iron-binding activity is obtained at neutral pH and low ionic strength. The inventors have found that a two-step process, including pre-mixing of the dairy protein with iron ions at neutral pH, followed by acidification to acidic pH, was necessary to allow complexation of iron ions by the dairy protein and a much higher iron-binding activity than the standard one-step process.

The food product of the invention contains oil or fat. It is not important whether the product contains oil or contains fat, or a combination of the two. The food product preferably comprises at least 1 %, more preferably at least 5 %, and even more preferably at least 10 %, by weight oil and/or fat. The oil and/or fat component of the food product contains at least some omega-3 fatty acids, preferably at least 0.1 %, more preferably at least 1 %, and even more preferably at least 5 %. In preferred embodiments of the invention, the oil and/fat contains 8 to 12 % by weight omega-3 fatty acids, which is typical of products containing rapeseed oil. In other preferred embodiments, the oil and/fat contains 20 to 40 % by weight omega-3 fatty acids, which is typical of products containing fish oil. These fatty acids may be, but are not limited to, any of the nutritionally important fatty acids α-linolenic acid (ALA), eicosapentaenoic acid (EPA), and docosahexaenoic acid (DHA), all of which are polyunsaturated.

The amount of oil and/or fat in the food product may vary considerably. For example, a salad dressing or a low-fat mayonnaise may contain 15 to 35 % by weight oil and/or fat, and a full-fat mayonnaise may contain 70 to 85 % by weight oil and/or fat.

The dairy protein may be any protein obtained from milk, provided that it does give the desired benefit, i.e. interacts with iron or unsaturated fatty acids in some way to prevent or minimise the production of fishy off-notes. While not limiting to any particular theory, it is considered that the dairy protein binds in some manner (e.g. by chelation or complexation) to iron ions present and therefore renders them inactive to catalysing oxidation of the unsaturated fatty acids. The most preferred protein of the invention is cGMP. The dairy protein may be incorporated into the food product using milk powder itself, or may be incorporated in the form of an extract from milk or milk powder.

The food product may be any emulsified food product that contains omega-3 fatty acids and iron ions and therefore where there is a need to minimise or prevent the formation of fishy off-notes. Particularly suited products are mayonnaise, salad dressing, various beverages, creamer, infant formula, baby food, dairy products such as yoghurt and ice cream, cereal products, functional drinks, and pet food. The products may be full-fat or reduced-fat products, e.g. low fat mayonnaise.

The inventors have also found that the method of preparation of the food product of the invention can have an impact on the effectiveness of the dairy protein for countering the effect of the iron ions on the fatty acids. Thus, in a one-step process the dairy protein may be mixed with an ingredient inherently containing iron ions before oil addition and emulsification. This process is particularly suited for neutral pH food products. For acidic pH products, an acidifier may be mixed with the protein and the iron source before the addition of oil and emulsification. In a two-step process (see Example 2 below), the protein may first be mixed with an ingredient already containing iron ions, and then an acidifier may be added. In this two-step process, the oil may be added and emulsified either before or after addition of the acidifier. The two-step process is particularly suited to acid pH products (e.g. mayonnaise products or salad dressings containing vinegar or citric acid as acidifier) as it enhances the effectiveness of the protein in preventing fishy off-note formation in the final emulsified product. This two-step process is also especially suited to dairy peptides, which may have very low effectiveness in the food product if prepared in a one-step process but a higher effectiveness if prepared using the two-step process.

### EXAMPLES

The invention is further described with reference to the following examples. It will be appreciated that the invention as claimed is not intended to be limited in any way by these examples.

### Example 1: Iron binding activity of cGMP compared to casein phosphopeptide and caseinate hydrolysate

Different EDTA solutions (5-50 µM) were prepared by dissolving 10 mg EDTA in 100 ml Millipore water, and further dilution of this 0.34 mM solution to obtain lower EDTA concentrations. The different dairy protein solutions (1-50 µM) were prepared by dissolving some protein sample in 100 ml Millipore water and mixing for 1 hour. A 0.5 mM iron chloride solution was prepared by dissolving 13 mg in 200 ml Millipore water. Iron calibrating solutions were prepared by several dilutions of the above solution. A 1 mM ferrozine solution was prepared by dissolving 25 mg of ferrozine in 50 ml in Millipore water.

The iron calibration was performed by mixing 135 µl Millipore water and 30 µl of the above iron chloride solutions. The iron-chelator complexes were prepared by mixing 135 µl of EDTA or dairy protein solutions at different concentrations and 30 µl of 0.5 mM iron chloride solution for 20 min at 26 °C. The free iron was measured by addition of 150 µl of 1 mM ferrozine to the solutions, stirring during 5 min at 26 °C, and measurement of the absorbance of the solutions at 562 nm using a UV/Vis-Spectrometer with microplate reader (Varioskan Flash).

All samples were analysed in quadruplicate. Blank samples (EDTA and dairy protein without iron) were prepared replacing 30 µl of 0.5 mM iron chloride solution with 30 µl of Millipore water in the procedure described above. The absorbance value of the blank sample (without iron) was deducted from the reading of the sample (with iron).

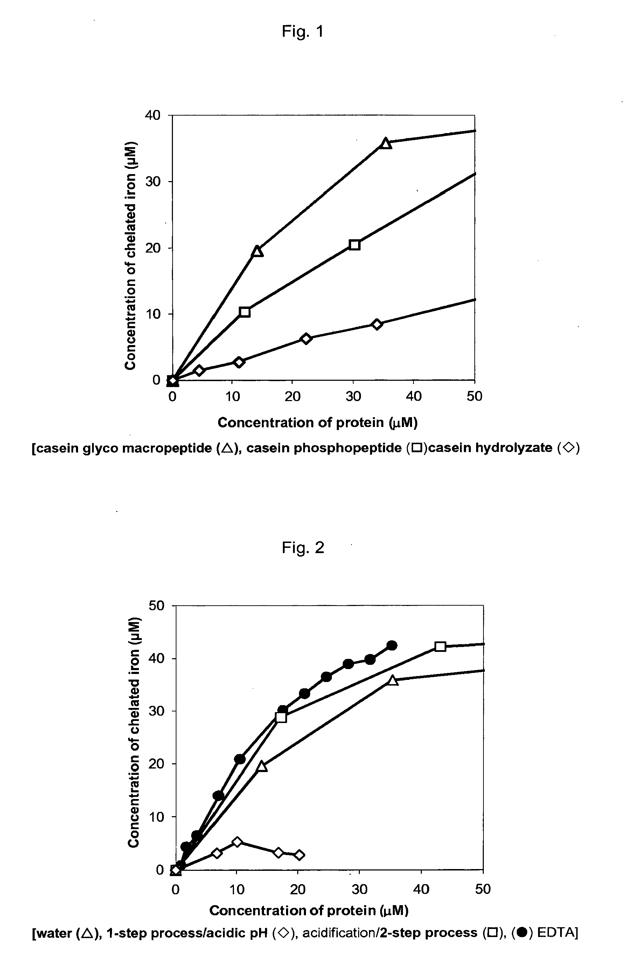

Figure 1 shows that when the concentration of casein hydrolysate increases, the concentration of bound iron does not increase much (∼20% of bound iron ions), i.e. casein hydrolysate is a poor iron binding ingredient. However, when the concentration of cGMP increases, the concentration of bound iron ions increases significantly in water, up to a maximum value (40 µM) corresponding to binding of ∼80% of iron ions present in solution. cGMP is thus a much more efficient iron binding ingredient compared to casein hydrolysate. The iron binding activity of cGMP was surprisingly even higher than that of casein phosphopeptide, despite its much lower degree of phosphorylation.

### Example 2: Effect of process on iron binding activity of cGMP at acidic pH

Iron-cGMP complexes were prepared at neutral pH according to the method described in Example 1

### Samples for the one-step process were prepared as follows:

A 0.1 M acetate buffer solution was prepared by mixing 463 ml of a 0.2 M acetic acid solution (5.7 ml glacial acetic acid in 494.3 ml Millipore water) with 37 ml of a 0.2 M acetate solution (1.64 g anhydrous sodium acetate with 98.36 g of Millipore water). The pH of the 0.1 M acetate buffer solution was 3.6 ± 0.1. The different dairy protein solutions (1-50 µM) were prepared by dissolving some protein sample in 100 ml of 0.1 M acetate buffer solution and mixing for 1 hour. A 0.5 mM iron chloride solution was prepared by dissolving 13 mg in 200 ml of 0.1 M acetate buffer solution. Iron calibrating solutions were prepared by several dilution of the above solution. A 1 mM ferrozine solution was prepared by dissolving 25 mg of ferrozine in 50 ml 0.1 M acetate buffer solution.

The iron calibration was performed by mixing 135 µl of 0.1 M acetate buffer solution and 30 µl of the above iron chloride solutions. The iron-chelator complexes were prepared by mixing 135 µl of dairy protein solutions at different concentrations and 30 µl of 0.5 mM iron chloride solution for 20 min at 26 °C. The free iron was measured by addition of 150 µl of 1 mM ferrozine to the solutions, stirring during 5 min at 26 °C, and measurement of the absorbance of the solutions at 562 nm using a UV/Vis-Spectrometer with microplate reader (Varioskan Flash). All samples were analysed in quadruplicate. Blank samples (dairy protein without iron) were prepared replacing 30 µl of 0.5 mM iron chloride solution with 30 µl of 0.1 M acetate buffer solution in the procedure described above. The absorbance value of the blank sample (without iron) was deducted from the reading of the sample (with iron).

### Samples for the two-step process were prepared as follows:

A 0.2 M acetate buffer solution was prepared by mixing 463 ml of a 0.4 M acetic acid solution (11.4 ml glacial acetic acid in 488.6 ml Millipore water) with 37 ml of a 0.4 M acetate solution (3.28 g anhydrous sodium acetate with 96.72 g of Millipore water) and 500 ml of Millipore water. The pH of the 0.2 M acetate buffer solution was 3.6 ± 0.1. The different dairy protein solutions (10-200 µM) were prepared by dissolving some protein powder in Millipore water different concentrations and mixing for 1 hour. A 18 mM iron chloride solution was prepared by dissolving 231 mg in 100 ml of 0.1 M acetate buffer solution. A 1 mM ferrozine solution was prepared by dissolving 25 mg of ferrozine in 50 ml 0.1 M acetate buffer solution. Iron calibrating solutions (10-100 µM) were prepared in 0.1 M acetate buffer (following the method described for the one-step process).

The iron-chelator complexes were prepared by mixing 25 ml of the above dairy protein solutions with 0.25 ml of 18 mM iron chloride solution for 20 min. Acidification was performed by addition of 25 ml of pH 3.6 0.2 M acetate buffer. The free iron was measured by addition of 150 µl of 1 mM ferrozine to 165 µl of iron-chelator solutions, stirring during 5 min at 26 °C, and measurement of the absorbance of the solutions at 562 nm using a UV/Vis-Spectrometer with microplate reader (Varioskan Flash). All samples were analysed in quadruplicate. Blank samples (dairy protein without iron) were prepared replacing 0.25 ml of 18 mM iron chloride solution with 0.25 ml of Millipore water in the procedure described above. The absorbance value of the blank sample (without iron) was deducted from the reading of the sample (with iron).

For both the one-step and the two-step process, the final iron-protein solutions all contained acetate buffer (pH 3.6, 0.1 M).

Figure 2 shows that the iron-binding activity of cGMP depends on the method of preparation of the complexes. The iron-binding activity of cGMP at acidic pH in acetate buffer is extremely low when the complexes are prepared with a one-step process (less than 10% of iron ions bound). The iron-binding activity is, however, much higher when the complexes are prepared with a two-step process, i.e. when the iron ions and the cGMP are pre-mixed at neutral pH before acidification with pH 3.6 acetate buffer. With this 2-step process, the iron-binding activity of cGMP was surprisingly even higher than that obtained at neutral pH where maximum efficiency was expected and was even similar to that of EDTA.

### Example 3: Effect ofprocess on iron binding activity of caseinate at acidic pH

Iron-caseinate complexes were prepared at neutral pH according to the method described in Example 1, and at acidic pH according to the one-step and two-step processes described in Example 2.

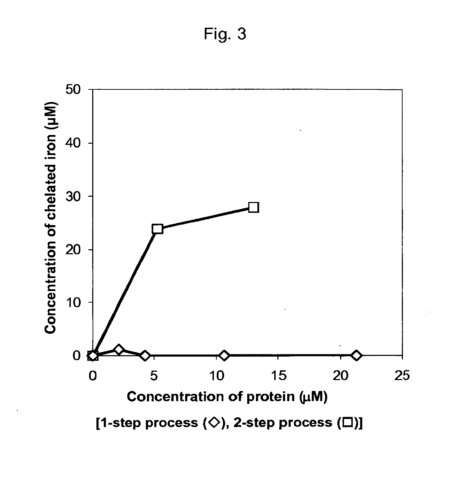

Figure 3 shows that caseinate has no iron-binding activity at acidic pH when the iron-protein complexes are prepared according to the one-step process, i.e. directly at low pH. However, the iron-binding activity of caseinate is significantly improved when complexes are prepared according to the two-step process.

### Example 4: Influence of cGMP on sensory profile of rapeseed oil mayonnaise

Rapeseed oil mayonnaise containing 80 % oil, and some egg yolk, mustard, vinegar, water, sugar, salt and flavourings was prepared using a Stephan mixer. Different concentrations of cGMP were added to mayonnaise during dry mixing. The mayonnaise samples were stored in glass jars in the dark at 20 °C for up to 10 months. The rancidity and fishiness were evaluated by a panel (> 5 people) on a scale from 0 to 6 (0: not noticeable, 1: just noticeable off-note, 2: slight off-note, 3: slight definite off-note, 4: definite off-note, 5: definite strong off-note, 6: strong off-note. A sample having a sensory score of 5 or higher was considered as unacceptable. The sensory profiles of the different mayonnaise samples were assessed until the sample was unacceptable.

Example 4 shows that fishiness developed quickly (less than 2 months) and strongly (score 5) in standard rapeseed oil mayonnaise. Addition of 0.1 % cGMP decreased the fishiness perception after 2 months (score 3) but did not extent shelf life. Barely any fishiness was noticeable in rapeseed oil mayonnaise containing 1% of cGMP. The addition of 2 % cGMP entirely inhibited off-note formation over 10 months of storage and was found to be as efficient as EDTA in preventing degradation of rapeseed oil mayonnaise.

| **Storage time (months)** | **0** | **2** | **4** | **5** | **7** | **10** |
|---|---|---|---|---|---|---|
| Rapeseed oil mayonnaise | 0 | 5 | 5 | - | - | - |
| Rapeseed oil mayonnaise + 75 ppm EDTA | 0 | 0 | 0 | 0 | 0 | 0 |
| Rapeseed oil mayonnaise 0.1 % cGMP | 0 | 3 | - | - | - | - |
| Rapeseed oil mayonnaise 1 % cGMP | 0 | 1 | 1 | 0 | 0 | 0 |
| Rapeseed oil mayonnaise 2 % cGMP | 0 | 0 | 0 | 0 | 0 | 0 |

## Claims

1. An emulsified food product comprising:
a) oil and/or fat, which contains some omega-3 fatty acids;
b) 0.05 to 5 % by weight of dairy protein; and
c) at least 10 ppm iron ions;
wherein the food product contains no EDTA (ethylenediaminetetraacetic acid); and wherein the dairy protein is casein glycomacropeptide (cGMP).

2. An emulsified food product as claimed in claim 1, which comprises at least 1 %, preferably at least 5 %, more preferably at least 10 %, by weight oil and/or fat.

3. An emulsified food product as claimed in claim 1 or claim 2, wherein the oil and/or fat contains at least 0.1 %, preferably at least 1 %, more preferably at least 5 %, by weight of omega-3 fatty acids, for example 8 to 12 % or 20 to 40 % by weight omega-3 fatty acids.

4. An emulsified food product as claimed in any one of claims 1 to 3, which comprises 15 to 35 % or 70 to 85 % by weight oil and/or fat.

5. An emulsified food product as claimed in any one of claims 1 to 4, which comprises 0.1 to 3 % by weight of dairy protein.

6. An emulsified food product as claimed in any one of claims 1 to 5, which comprises at least 20 ppm iron ions, preferably at least 50 ppm iron ions.

7. An emulsified food product as claimed in any one of claims 1 to 6, comprising egg yolk, preferably at least 1 % by weight egg yolk.

8. An emulsified food product as claimed in claim 7, wherein the egg yolk is fresh egg yolk or powdered egg yolk.

9. An emulsified food product as claimed in any one of claims 1 to 8, which is a mayonnaise, salad dressing, beverage, creamer, infant formula, baby food, dairy product, cereal product, functional drink, ice cream, or pet food.

10. A process for preparing an emulsified food product that contains no EDTA (ethylenediaminetetraacetic acid) comprising mixing together:
a) oil and/or fat, which contains some omega-3 fatty acids;
b) 0.05 to 5 % by weight of dairy protein;
c) a source of iron which contains at least 10 ppm iron ions; and
d) water;
wherein the dairy protein is casein glycomacropeptide (cGMP).

11. A process as claimed in claim 10, further comprising mixing an acidifier with components a) to d).

12. A process as claimed in any one of claims 10 to 11, wherein components b) and d) are mixed together, then the acidifier is added and mixed, and then a) is added and emulsified.

13. A process as claimed in any one of claims 10 to 11, wherein components b) and d) are mixed together, then a) is added and emulsified, and then the acidifier is added and mixed.

14. A process as claimed in any one of claims 10 to 11, wherein components b) and d) and acidifier are mixed together, and then a) is added and emulsified.

## Patentansprüche

1. Emulgiertes Lebensmittelprodukt, aufweisend:
a) Öl und/oder Fett, das einige Omega-3-Fettsäuren enthält;
b) 0,05 bis 5 Gew.-% Milchprotein; und
c) mindestens 10 ppm Eisenionen;
wobei das Lebensmittelprodukt keine EDTA (Ethylendiamintetraessigsäure) enthält; und
wobei das Milchprotein Casein-Glykomakropeptid (cGMP) ist.

2. Emulgiertes Lebensmittelprodukt nach Anspruch 1, das mindestens 1 Gew.-%, vorzugsweise mindestens 5 Gew.-%, weiter bevorzugt mindestens 10 Gew.-%, Öl und/oder Fett aufweist.

3. Emulgiertes Lebensmittelprodukt nach Anspruch 1 oder Anspruch 2, wobei das Öl und/oder Fett mindestens 0,1 Gew.-%, vorzugsweise mindestens 1 Gew.-%, weiter bevorzugt mindestens 5 Gew.-%, Omega-3-Fettsäuren, z.B. 8 bis 12 Gew.-% oder 20 bis 40 Gew.-% Omega-3-Fettsäuren, enthält.

4. Emulgiertes Lebensmittelprodukt nach einem der Ansprüche 1 bis 3, das 15 bis 35 Gew.-% oder 70 bis 85 Gew.-% Öl und/oder Fett aufweist.

5. Emulgiertes Lebensmittelprodukt nach einem der Ansprüche 1 bis 4, das 0,1 bis 3 Gew.-% Milchprotein aufweist.

6. Emulgiertes Lebensmittelprodukt nach einem der Ansprüche 1 bis 5, das mindestens 20 ppm Eisenionen, vorzugsweise mindestens 50 ppm Eisenionen, aufweist.

7. Emulgiertes Lebensmittelprodukt nach einem der Ansprüche 1 bis 6, aufweisend Eigelb, vorzugsweise mindestens 1 Gew.-% Eigelb.

8. Emulgiertes Lebensmittelprodukt nach Anspruch 7, wobei das Eigelb frisches Eigelb oder Eigelbpulver ist.

9. Emulgiertes Lebensmittelprodukt nach einem der Ansprüche 1 bis 8, das eine Mayonnaise, eine Salatsoße, ein Getränk, ein Kaffeeweißer, eine Säuglingsnahrung, eine Babynahrung, ein Milchprodukt, ein Getreideerzeugnis, ein funktionelle Getränk, Eiskrem oder ein Haustierfutter ist.

10. Verfahren zur Herstellung eines emulgierten Lebensmittelproduktes, das keine EDTA (Ethylendiamintetraessigsäure) enthält, und das das Mischen der folgenden Bestandteile aufweist:
a) Öl und/oder Fett, das einige Omega-3-Fettsäuren enthält;
b) 0,05 bis 5 Gew.-% Milchprotein;
c) eine Eisenquelle, die mindestens 10 ppm Eisenionen enthält; und
d) Wasser,
wobei das Milchprotein Casein-Glykomacropeptid (cGMP) ist.

11. Verfahren nach Anspruch 10, weiterhin aufweisend das Mischen eines Säuerungsmittels mit den Bestandteilen a) bis d).

12. Verfahren nach einem der Ansprüche 10 bis 11, wobei die Bestandteile b) und d) vermischt werden, anschließend das Säuerungsmittel hinzugefügt und vermischt wird, und dann a) hinzugefügt und emulgiert wird.

13. Verfahren nach einem der Ansprüche 10 bis 11, wobei die Bestandteile b) und d) vermischt werden, anschließend a) hinzugefügt und emulgiert wird, und dann das Säuerungsmittel hinzugefügt und vermischt wird.

14. Verfahren nach einem der Ansprüche 10 bis 11, wobei die Bestandteile b) und d) und das Säuerungsmittel vermischt werden und dann a) hinzugefügt und emulgiert wird.

## Revendications

1. Produit alimentaire émulsifié comprenant :
a) de l'huile et/ou de la matière grasse, qui contient des acides gras oméga-3 ;
b) de 0,05 à 5 % en poids de protéine de lait ; et
c) au moins 10 ppm d'ions fer ;
dans lequel le produit alimentaire ne contenant pas d'EDTA (acide éthylène diamine tétraacétique) ; et
dans lequel la protéine de lait est un glycomacropeptide de caséine (cGMP).

2. Produit alimentaire émulsifié selon la revendication 1, qui comprend au moins 1 %, de préférence au moins 5 %, plus préférablement au moins 10 %, en poids d'huile et/ou de matière grasse.

3. Produit alimentaire émulsifié selon la revendication 1 ou la revendication 2, dans lequel l'huile et/ou la matière grasse contient au moins 0,1 %, de préférence au moins 1 %, plus préférablement au moins 5 %, en poids d'acides gras oméga-3, par exemple de 8 à 12 % ou de 20 à 40 % en poids d'acides gras oméga-3.

4. Produit alimentaire émulsifié selon l'une quelconque des revendications 1 à 3, qui comprend de 15 à 35 % ou de 70 à 85 % en poids d'huile et/ou de matière grasse.

5. Produit alimentaire émulsifié selon l'une quelconque des revendications 1 à 4, qui comprend de 0,1 à 3 % en poids de protéine de lait.

6. Produit alimentaire émulsifié selon l'une quelconque des revendications 1 à 5, qui comprend au moins 20 ppm d'ions fer, de préférence au moins 50 ppm d'ions fer.

7. Produit alimentaire émulsifié selon l'une quelconque des revendications 1 à 6, comprenant du jaune d'oeuf, de préférence au moins 1 % en poids de jaune d'oeuf.

8. Produit alimentaire émulsifié selon la revendication 7, dans lequel le jaune d'oeuf est du jaune d'oeuf frais ou du jaune d'oeuf en poudre.

9. Produit alimentaire émulsifié selon l'une quelconque des revendications 1 à 8, qui est une mayonnaise, sauce pour salade, boisson, crème, préparation pour nourrisson, nourriture pour bébé, produit laitier, produit céréalier, boisson fonctionnelle, crème glacée, ou nourriture pour animal de compagnie.

10. Procédé de préparation d'un produit alimentaire émulsifié ne contenant pas d'EDTA (acide éthylène diamine tétraacétique) comprenant le mélange :
a) d'huile et/ou de matière grasse, qui contient des acides gras oméga-3 ;
b) de 0,05 à 5 % en poids de protéine de lait ;
c) d'une source de fer qui contient au moins 10 ppm d'ions fer ; et
d) d'eau ;
dans lequel la protéine de lait est un glycomacropeptide de caséine (cGMP).

11. Procédé selon la revendication 10, comprenant en outre le mélange d'un acidifiant avec les composants a) à d).

12. Procédé selon l'une quelconque des revendications 10 à 11, dans lequel les composants b) et d) sont mélangés ensemble, puis l'acidifiant est ajouté et mélangé, puis a) est ajouté et émulsifié.

13. Procédé selon l'une quelconque des revendications 10 à 11, dans lequel les composants b) et d) sont mélangés ensemble, puis a) est ajouté et émulsifié, puis l'acidifiant est ajouté et mélangé.

14. Procédé selon l'une quelconque des revendications 10 à 11, dans lequel les composants b) et d) et l'acidifiant sont mélangés ensemble, puis a) est ajouté et émulsifié.
